# EUROPÄISCHE PATENTSCHRIFT

(11) **EP 1 314 871 B1**
(45) Veröffentlichungstag und Bekanntmachung des Hinweises auf die Patenterteilung: **14.11.2007**
(21) Anmeldenummer: 02026079.0
(22) Anmeldetag: 22.11.2002
(51) Int. Cl.: F02B 63/06, F02B 67/00, F02M 59/44

(54) **Verfahren zur Bestimmung der Lagerkräfte einer angetriebenen Welle, insbesondere für Kraftstoffeinspritzpumpen von Brennkraftmaschinen**
Process for determining bearing forces of a driven shaft , particularly for injection pumps of internal combustion engines
Procédé pour déterminer des forces de paliers des arbres entraînés, plus particulièrement pour des pompes à injection de moteurs à combustion interne

(30) Priorität: 23.11.2001 DE 10157465
(43) Veröffentlichungstag der Anmeldung: 28.05.2003
(73) Patentinhaber: ROBERT BOSCH GMBH, 70442 Stuttgart (DE)
(72) Erfinder: Hondros, Christos, 70327 Stuttgart (DE)

(56) Entgegenhaltungen:
- DE-A- 4 203 551
- DE-C- 19 720 325
- GB-A- 1 433 133
- US-A- 4 112 751
- US-A- 5 033 317
- US-A- 6 026 786

## Beschreibung

### Stand der Technik

Die Erfindung bezieht sich auf ein Verfahren nach dem Oberbegriff des Patentanspruchs 1.

Die Welle einer Kraftstoff-Einspritzpumpe in einer Brennkraftmaschine wird üblicherweise durch die Kurbelwelle über einen Ketten- oder Zahnriementrieb angetrieben. Hierzu besitzt die Welle außerhalb des Pumpengehäuses, in dem sie gelagert ist, ein entsprechendes Zahnrad. Die Lagerkräfte werden entscheidend durch die vom Ketten- bzw. Zahnriementrieb auf die Welle übertragenen Kräfte und deren Richtung bestimmt. Bei diesen Kräften handelt es sich nicht nur um die eigentliche Antriebskraft (Torsionsmoment), sondern - bedingt durch die Ketten- bzw. Zahnriemenspannung - auch um Umlaufbiegekräfte. Insbesondere diese Biegekräfte bestimmen die Lagerbelastung und damit auch die notwendige Kalibrierung der Lager.

Nach dem bisherigen Stand der Technik wurde - vereinfachend - angenommen, dass auf die Welle nur eine einzige Kraft (die Antriebskraft) einwirkt, durch die die Welle auch nur in einer bestimmten Richtung biegebeansprucht wird. Ausgehend von dieser Annahme, sah man als Kraftangriffspunkt an der Welle die Mitte der Kette bzw. des Zahnriemens an. Auf der Basis (nur) einer Messung des Biegemoments antriebsseitig, unmittelbar neben dem antriebsnahen Lager wurde - unter Anwendung der Gesetze der Mechanik - die von der Welle auf das antriebsnahe Lager ausgeübte Lagerkraft errechnet. Nachdem diese Lagerkraft ermittelt war, konnte dann auch die auf das zweite, antriebsferne Wellenlager wirkende Lagerkraft errechnet werden.

Es gibt jedoch auch Brennkraftmaschinen, bei denen - aufgrund der Antriebs-Konzeption für die Hilfsaggregate - mehrere Kräfte in unterschiedlichen Richtungen auf die Welle der Kraftstoff-Einspritzpumpe einwirken. Dies ist z.B. bei Motoren der Fall, bei denen die Nockenwelle von der Kurbelwelle nicht unmittelbar, sondern mittelbar über die Einspritzpumpenwelle angetrieben wird. Auf dem Zahnriemenritzel der Einspritzpumpenwelle liegt also nicht nur der unmittelbar von der Kurbelwelle betätigte Antriebszahnriemen (bzw. Antriebskette), sondern auch der von der Einspritzpumpenwelle zur Nockenwelle führende, diese antreibende Zahnriemen auf. Die beiden Triebe stehen unter einem Winkel von ca. 90° zueinander, was entsprechend unterschiedliche Richtungen der auf die Einspritzpumpenwelle wirkenden Biegekräfte bedeutet.

Bei unterschiedlichen Kräfteverhältnissen, wie im Vorstehenden geschildert, hat sich die bisherige Annahme, der Kraftangriffspunkt an der Welle sei unveränderlich die Mitte der Antriebskette bzw. des Antriebszahnriemens, als zu ungenau für die Bestimmung der Lagerkräfte und - daraus resultierend - die Lagerkalibrierung erwiesen. Realistischerweise muss man vielmehr davon ausgehen, dass der Kraftangriffspunkt von einer Ketten- bzw. Zahnriemenkante zur anderen wandern kann. Diese Gegebenheit wird mit dem bisherigen Messprinzip (s.o.) nicht berücksichtigt.

Aufgabe der Erfindung ist es, das Verfahren zur Bestimmung der Lagerkräfte so zu verbessern, dass sich - ungeachtet der jeweiligen Antriebskonzeption der Welle - der Kraftangriffspunkt bei beliebigem Betriebszustand ermitteln lässt, auch wenn mehrere Kräfte an der Welle aus verschiedenen Richtungen und Abständen wirken.

### Vorteile der Erfindung

Gemäß der Erfindung wird die Aufgabe bei einem Verfahren der eingangs bezeichneten Gattung durch die kennzeichnenden Maßnahmen des Patentanspruchs 1 gelöst.

Vorteilhafte Weiterbildungen des Grundgedankens der Erfindung enthalten die Patentansprüche 2 bis 8.

Das erfindungsgemäße Messverfahren bietet eine bessere Genauigkeit als das eingangs geschilderte bekannte Verfahren. Insbesondere lässt sich durch die Erfindung bei einem Riemenantrieb der Krafteinleitungspunkt genau bestimmen. Des Weiteren ermöglichen die erfindungsgemäßen Maßnahmen im Verhältnis zum bisher angewandten Verfahren eine wesentliche Verringerung des Aufwands. Bisher musste nämlich - je nach Anordnung des Antriebs (Riemen, Zahnrad usw.) für jede Pumpe ein Korrekturfaktor bestimmt werden. Dies fällt mit dem neuen Verfahren weg. Es ist unabhängig vom Antrieb lediglich der Abstand der beiden Wellenlager notwendig. Der zu bestimmende (Ersatz-)Kraftangriffspunkt der auf die Welle ausgeübten Biegebelastung lässt sich unter Zugrundelegung der durch das erfindungsgemäße Verfahren ermittelten Messergebnisse nach den bekannten Gesetzen der Mechanik berechnen. Insgesamt ermöglicht die Erfindung die Einführung einer einheitlichen Kalibrierung für alle Typen von Einspritzpumpen. Die Erfindung kann somit Grundlage einer Norm zur Bestimmung der Lagerkraft an Einspritzpumpen werden.

### Zeichnung

Die Erfindung ist anhand von Ausführungsbeispielen in der Zeichnung veranschaulicht, die im Folgenden detailliert beschrieben werden. Es zeigt (überwiegend in schematischer Darstellung):
- Fig. 1: eine zweifach gelagerte Welle, z.B. Einspritzpumpenwelle, die nur von einer einzigen Biegekraft belastet wird,
- Fig. 2: die Lagerbelastung durch die Welle nach Fig. 1, anhand eines Ersatzmodells aus der technischen Mechanik,
- Fig. 3: - in stirnseitiger Betrachtung - eine Kraftstoff-Einspritzpumpenwelle, die zum einen durch einen Kurbelwellentrieb und zum anderen durch einen Nockenwellentrieb biegebelastet wird,
- Fig. 4: ein Ersatzmodell, das die Biegebelastungsverhältnisse durch den Kurbelwellentrieb (Ebene 1 - 1 in Fig. 3) zeigt,
- Fig. 5: ein Ersatzmodell, das die Biegebelastungsverhältnisse durch den Nockenwellentrieb (Ebene 2 - 2 in Fig. 3) zeigt,
- Fig. 6: eine Ausführungsform einer Einspritzpumpenwelle, die als Messwelle für die zu ermittelnden Lagerkräfte konzipiert ist,
- Fig. 7: eine Messwelle entsprechend Fig. 1, in schematisierter Darstellung, zur Ermittlung der am antriebsnahen ersten Lager (s. Lager A" in Fig. 1) anfallenden Lagerkraft,
- Fig. 8: - in Darstellung entsprechend Fig. 7 - eine Messwelle Zur Ermittlung der am antriebsferneren zweiten Lager (s. Lager B" in Fig. 1) anfallenden Lagerkraft,
- Fig. 9: - in stirnseitiger Betrachtung bezüglich der Messwelle nach Fig. 7 bzw. 8 - ein Zusatzwerkzeug zur Anbringung eines Zusatzgewichts an der Messwelle nach Fig. 7 bzw. 8,
- Fig. 10: ein Ersatzmodell mit Biegemomentverlauf für die Wellen-Biegebelastung nach Fig. 3 bis 5, wobei die in zwei unterschiedlichen Ebenen wirkenden unterschiedlichen Biegekräfte in eine resultierende Ebene projiziert sind,
- Fig. 11: ein Diagramm zur Ermittlung (durch Extrapolation) des Biegemoments am Kraftangriffspunkt Fₖ (Fig. 10) bei am Punkt x₃ (Fig. 10) gemessenem Biegemoment,
- Fig. 12: ein Ersatzmodell zur Ermittlung einer aus den beiden Kräften F_{Z} und Fₖₜ (Fig. 10) resultierenden Ersatzkraft (Fₑᵣₛ) aus den beiden Kräften F_{Z} und Fₖₜ (Fig. 10) und den von ihnen erzeugten Biegemomenten, und
- Fig. 13: ein Diagramm zur Ermittlung (im Wege der Extrapolation) des zur Ersatzkraft (Fₑᵣₛ, Fig. 12) zugehörigen Ersatzhebelarms (Zₑᵣₛ).

### Beschreibung der Ausführungsbeispiele

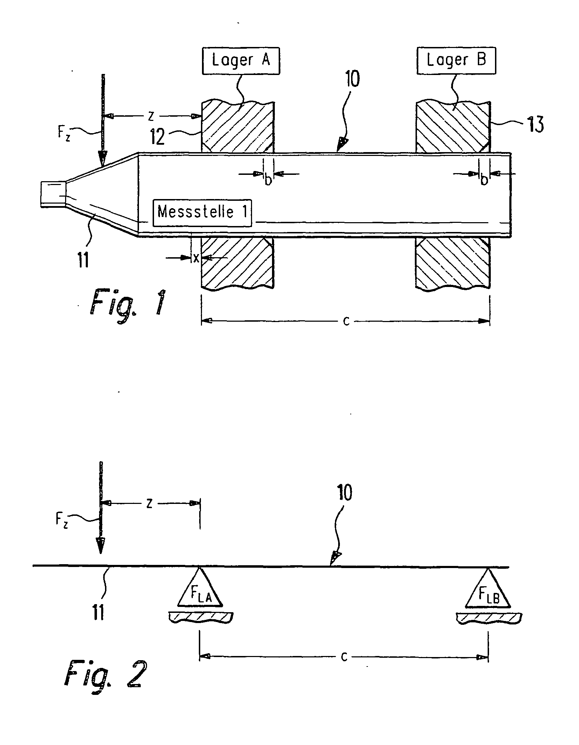

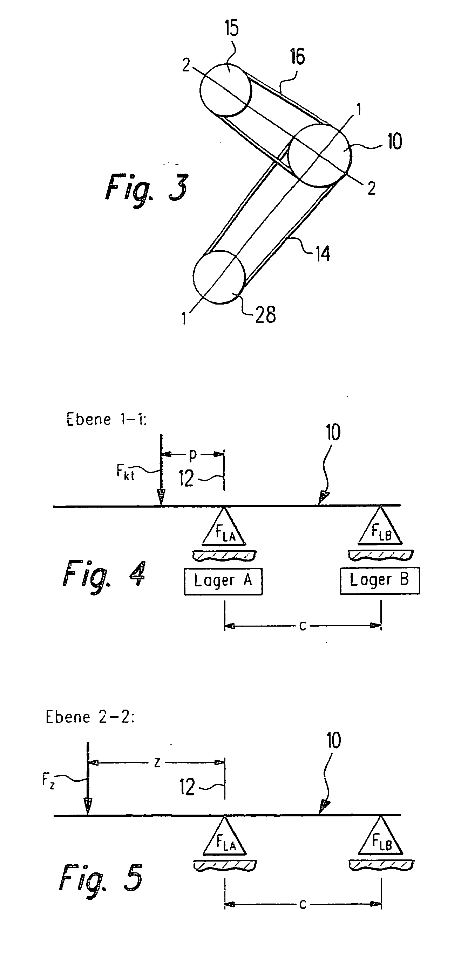

In Fig. 1 (bzw. Fig. 2) bezeichnet 10 eine in einem (nicht dargestellten) Gehäuse zweifach gelagerte Welle, z.B. die Welle einer Kraftstoff-Einspritzpumpe für Brennkraftmaschinen, die - bei 11 - durch einen - z.B. von der Kurbelwelle der Brennkraftmaschine angetriebenen - Ketten- oder Zahnriementrieb angetrieben und dabei gleichzeitig biegebelastet wird. Die Biegekraft ist durch einen Pfeil F_{Z} angedeutet. Ein antriebsnahes erstes Lager ist mit Lager A" und ein antriebsfernes zweites Lager ist mit "lager B" bezeichnet. Bei der Lagern A und B soll die (vereinfachende) Annahme gelten, dass die von der Welle 10 auf die Lager A und B ausgeübten Kräfte - Lagerkräfte F_{LA} bzw. F_{LB} -jeweils nur an den Außenkanten 12 bzw. 13 der Lager A und B angreifen (vgl. Fig. 2). Hierbei wird die Fasenbreite b an den Lagern A und B (zunächst) vernachlässigt. Eine Messstelle zur Biegemomentmessung an der Welle 10 ist in einem Abstand x (von ca. 1,5 mm) von der Lagerkante 12 positioniert. Der Abstand x wird ebenfalls (zunächst) vernachlässigt. Des Weiteren bezeichnet c den Lagerabstand und z den Hebelarm der Biegekraft F_{Z} zur Lagerkante 12.

Im Gegensatz zu den Verhältnissen nach Fig. 1 und 2 wird bei der Konzeption nach Fig. 3 bis 5 die Welle 10, bei der es sich um die angetriebene Welle einer Kraftstoff-
Einspritzpumpe handelt, durch zwei in unterschiedlichen Ebenen - in Fig. 3 mit 1 - 1 bzw. 2 - 2 beziffert - wirkende Antriebs- bzw. Biegekräfte F_{Z} und Fₖₜ belastet. Es handelt sich zum einen um einen von der Kurbelwelle 28 betätigten Trieb 14 (z.B. Kettentrieb), der die Pumpenwelle 10 antreibt, und zum anderen um einen die Nockenwelle 15 antreibenden Trieb 16 (z.B. Zahnriementrieb). Wie Fig. 4 und 5 veranschaulichen, wirken die durch die Triebe 14 und 16 auf die Pumpenwelle 10 aufgebrachten Biegekräfte Fₖₜ und F_{z} nicht nur in verschiedenen Ebenen (1 - 1 bzw. 2 - 2, Fig. 3), sondern auch mit unterschiedlichen Hebelarmen - p bzw. z - auf die Welle 10 ein. Im Einzelnen sind die Variablen in Fig. 4 und 5 wie folgt bezeichnet:
- c:: Lagerabstand
- Fₖₜ:: Biegekraft durch Kettentrieb 14
- F_{LA}:: Lagerkraft am Lager A
- F_{LB}:: Lagerkraft am Lager B
- F_{Z}:: Biegekraft durch Zahnriementrieb 16
- p:: Abstand Lagerkante 12 zur Biegekraft Fₖₜ
- z:: Abstand Mitte Zahnriementrieb 16 zu Lagerkante 12.

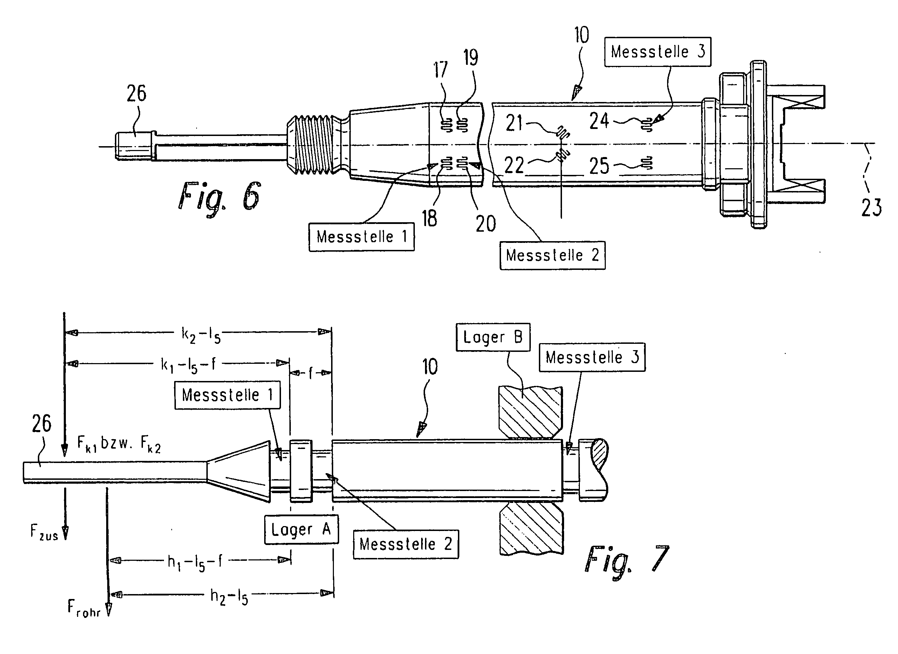

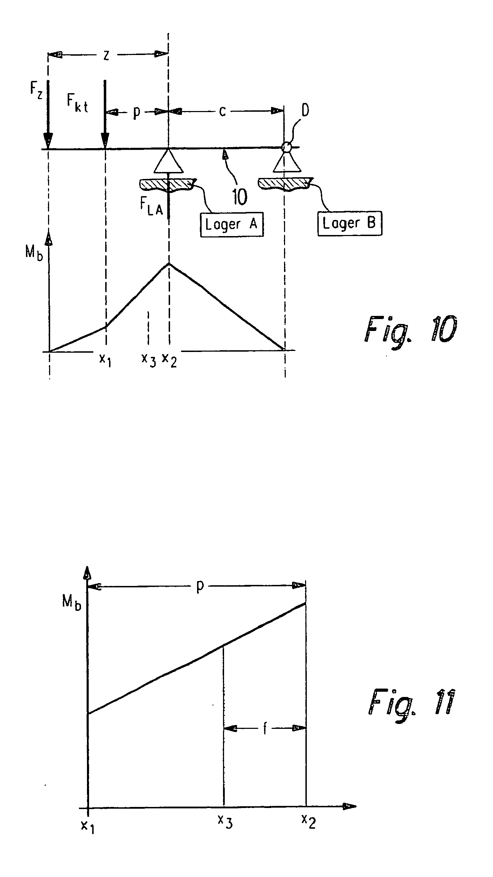

Bei der Anordnung nach Fig. 6 und 7 ist die Pumpenwelle 10 speziell als Messwelle
konzipiert und lediglich am antriebsferneren zweiten Lager (Lager B) gelagert (s. Fig. 7). Im Bereich des antriebsnahen ersten Lagers (Lager A) sind auf der Welle 10 zwei Messstellen - in Fig. 7 mit "Messstelle 1" und "Messstelle 2" bezeichnet - eingerichtet, die zur Ermittlung des Biegemomentverlaufs (vgl. hierzu Fig. 10) dienen. Fig. 6 macht deutlich, dass die Messstellen 1 und 2 aus je zwei am Wellenumfang gegenüberliegenden Dehnungsmessstreifen 17, 18 und 19, 20 bestehen, die in Halbbrücken-Schaltung geschaltet sind und einen elektrischen Widerstand von 120 Ohm aufweisen. Die Messstellen 1 und 2 ermöglichen die Ermittlung der Lagerkraft L_{LA} am Lager A.

Zur Messung des die Welle 10 beaufschlagenden Drehmoments sind des Weiteren zwei am Wellenumfang gegenüberliegende 90°-Dehnungsmessstreifen-Torsionsrosetten 21, 22 unter 45°-Neigung zur Wellenachse 23 angeordnet und in Vollbrücke-Schaltung (120 Ohm pro Brückenzweig) geschaltet.

Zur Ermittlung der Lagerkraft F_{LB} am Lager B ist ferner eine Messstelle 3 vorgesehen, die - ähnlich wie die Messstellen 1 und 2 - aus zwei am Wellenumfang gegenüberliegenden Dehnungsmessstreifen - hier mit 24, 25 beziffert - bestehen.

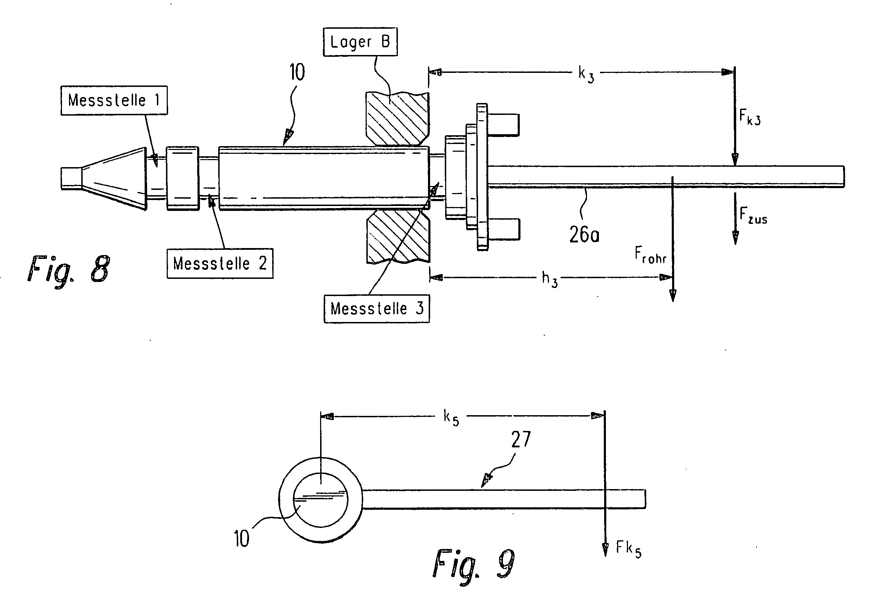

Wie des Weiteren aus Fig. 6 und 7 hervorgeht, ist am antriebsseitigen (freien) Ende der Welle 10 ein Rohr 26 befestigt, das zusätzlich bei der Kalibrierung an der Welle 10 eingeschraubt wird. An dem zusätzlichen Rohr 26 greifen diverse Kräfte ein, die in Fig. 7 einschließlich der zugehörigen Hebelarme durch vertikale Pfeile bzw. horizontale Doppelpfeile eingezeichnet sind. Nachstehend sind folgende für Versuchsaufbau und Durchführung der Messungen wichtige Variable definiert (vgl. hierzu auch Fig. 9):
- f:: Abstand Messstelle 1 zu Messstelle 2
- F_{Adapter}:: Kraft infolge Adapter zur Drehmomentkalibrierung
- Fₖ₁ - Fₖ₃:: Kraft, hervorgerufen durch das aufgelegte Gewicht
- Fₖᵤₚₗ:: Kraft infolge Kupplungshälfte
- Fᵣₒₕᵣ:: Kraft, hervorgerufen durch die Rohrmasse des Rohres 26
- F_{zus}:: Kraft durch das Gewicht der Zusatzwerkzeuge, die nötig sind, um das Kalibriergewicht aufzubringen (Gewichts-Auflageteller und Einhängevorrichtung sowie Büchse)
- h:: Abstand Schwerpunkt Rohr 26 zum Gehäuseflansch
- k:: Abstand Kalibriergewicht zum Gehäuseflansch
- I₅: Gehäuseflansch bis Lagerkante
- m:: Abstand Kupplungshälfte bis Gehäuseflansch
- n:: Abstand Adapter bis Gehäuseflansch
- X_{DMS}:: Abstand Lagerkante zur Dehnungsmessstreifen-Mitte
- Zus.Rohr:: Rohr 26, das zusätzlich bei der Kalibrierung an der Welle 10 eingeschraubt wird.

Zur Ermittlung des benötigten Biegemomentverlaufs und der Lagerkraft F_{LA} wird wie folgt vorgegangen:
Die Messwelle 10 wird, wie aus Fig. 7 ersichtlich, nur am Lager B gelagert. Anschließend werden Fᵣₒₕᵣ und F_{zus} bestimmt. Dann werden Rohr 26 und
Zusatzwerkzeug 27 (s. Fig. 9) montiert. Aus der vorgegebenen Geometrie lassen sich die Abstände h, k für die Messstellen 1 und 2 bestimmen. Es wird an jeder Messstelle 1 bzw. 2 das gleiche Biegemoment aufgebracht. Nach Bestimmung verschiedener Biegemomente lassen sich die notwendigen Gewichte aus dem Momentengleichgewicht um die Lagerstelle B errechnen. Anschließend ist die Kalibrierung für jede Messstelle 1 bzw. 2 für ausgewählte Biegemomente durchzuführen.

Bei der Messwellenanordnung nach Fig. 8 geht es um die Ermittlung der Lagerkraft F_{LB} am Lager B bzw. um die Kalibrierung der Messstelle 3. Hierfür ist seitlich des Lagers B die oben bereits erwähnte Messstelle 3 eingerichtet (s. auch Fig. 6). Im Unterschied zur Anordnung nach Fig. 7 ist hier das zusätzliche Rohr 26 a am anderen Ende der Messwelle 10 befestigt. Hinsichtlich der hier anfallenden Variablen wird auf die o.a. Definition verwiesen.

Auch bei der Anordnung nach Fig. 8 sind zunächst die Kräfte Fᵣₒₕᵣ und F_{zus} zu bestimmen. Dann werden Rohr 26 a und Zusatzwerkzeug 27 (s. Fig. 9) montiert. Bei dem Rohr 26 a handelt es sich um ein gegenüber dem Rohr 26 nach Fig. 7 etwas abgewandeltes Bauteil. Anschließend können aus der vorgegebenen Geometrie die Abstände h, k, wie in Bild 8 dargestellt, für die Messstelle 3 bestimmt werden. Ähnlich wie bei der Anordnung nach Fig. 7 werden wiederum verschiedene Biegemomente bestimmt, und nach den Gesetzen der Mechanik (Momentengleichgewicht) werden die notwendigen Gewichte berechnet. Anschließend kann die Kalibrierung der Messstelle 3 für ausgewählte Biegemomente durchgeführt werden.

Für das in Fig. 9 dargestellte Zusatzwerkzeug 27 gilt folgende Variablendefinition:
- Fₖ₅:: Kraft (= aufgelegte Masse, multipliziert mit Erdbeschleunigung)
- K₅:: Hebelarm der am Zusatzwerkzeug 27 angreifenden Kraft Fₖ₅, bezogen auf die Mitte der Messwelle 10

Aus Fig. 10 ist nun ersichtlich, wie sich die Lagerkraft F_{LA} am Lager A bei der Belastung der Welle 10 durch zwei Kräfte, F_{Z} und Fₖₜ, wie sie sich aus der Anordnung nach Fig. 3 bis 5 ergibt, ermittelt werden kann. Um hierfür zunächst die Kräfte F_{Z} und Fₖₜ (in der resultierenden Ebene) zu ermitteln, wird das Biegemoment an den Stellen x₁ und x₂ benötigt.

An der Stelle x₂ kann eine Messstelle vorgesehen werden (die bereits erwähnte Messstelle 2). An der Stelle x₁ (in Fig. 10) ist jedoch aus Platzgründen an der Welle 10 eine Messstellenanordnung nicht möglich, so dass sich das Biegemoment unmittelbar an der Stelle x₁ nicht messen lässt. Es kann jedoch das Biegemoment an der Stelle x₃ (entspricht der Lage der bereits erwähnten Messstelle 1) gemessen werden. Über die Steigung des Biegemomentverlaufs lässt sich dann das gesuchte Biegemoment an der Stelle x₁ durch Extrapolation errechnen. Dies ist im Einzelnen aus Fig. 11 ersichtlich.

Was die für die Berechnung der Biegekräfte F_{Z} und Fₖₜ maßgebenden Variablen betrifft, so wird benötigt das Biegemoment an der jeweiligen Position xᵢ der Welle 10. Hinsichtlich der Definition der übrigen in Fig. 10 und 11 angegebenen Variablen wird auf die oben im Zusammenhang mit Fig. 3 bis 5 angegebene Variablen-Definition verwiesen. Aus den ermittelten Biegemomenten M_{b} (x₁) und M_{b} (x₂) lässt sich also, wie ausgeführt, das Biegemoment M_{b} (x₃) errechnen. Aus den Biegemomenten M_{b} (x₁) und M_{b} (x₃) können sodann - nach den Gesetzen der Mechanik - die Biegebelastungen F_{Z} und Fₖₜ und daraus schließlich die Lagerkräfte F_{LA} und F_{LB} errechnet werden.

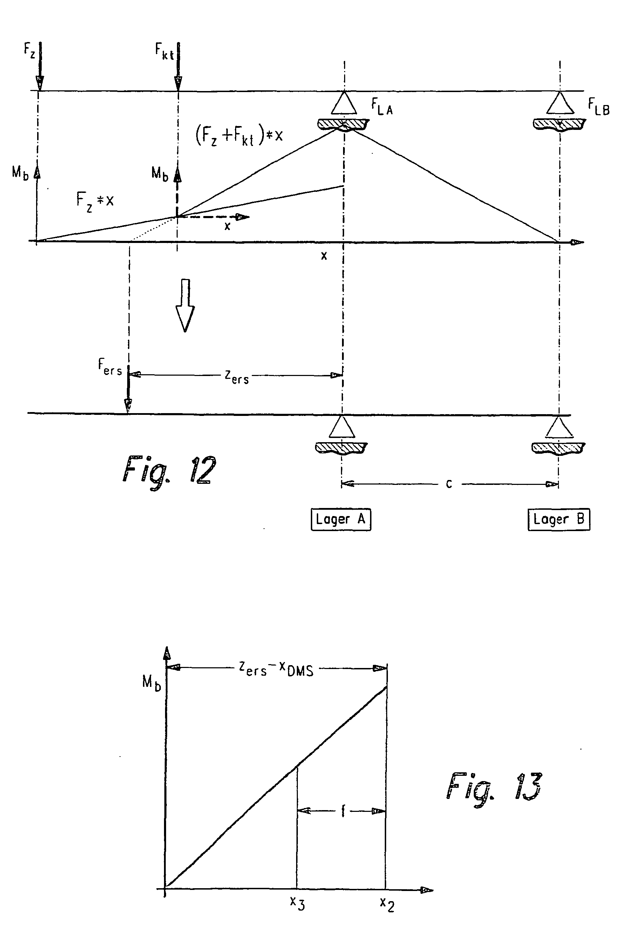

Die Berechnung der Lagerkräfte lässt sich dadurch vereinfachen, dass man aus der Summe der Kräfte F_{Z} und Fₖₜ eine Ersatzkraft Fₑᵣₛ bildet. Es muss dann allerdings auch ein Ersatzhebelarm zₑᵣₛ errechnet werden, der an die Stelle der Einzelhebelarme z und p (s. Fig. 10 und 11 bzw. 4 und 5) tritt. Der Ersatzhebelarm zₑᵣₛ lässt sich anhand des Ersatzmodell nach Fig. 12 ermitteln. Danach entspricht die Steigung der Biegemomentenkurve, wie sie sich zwischen dem Angriffspunkt der Kraft Fₖₜ und dem Lager A als Resultierende der Einzelbiegemomente F_{Z} . x und Fₖₜ . x ergibt, exakt der Steigung der Biegemomentenkurve der Ersatzkraft Fₑᵣₛ. Als Angriffspunkt der Ersatzkraft Fₑᵣₛ an der Welle 10 ergibt sich daraus die Stelle, an der die (gedachte) rückwärtige Verlängerung der Biegemomentenkurve (F_{Z} + Fₖₜ)· x die Abszisse x schneidet. Der Ersatzhebelarm zₑᵣₛ stellt sich dann als Abstand zwischen dem Kraftangriffspunkt Fₑᵣₛ und dem Lager A dar. Die Steigung der Biegemomentenkurve von Fₑᵣₛ kann über die zwei Messstellen ermittelt werden. Da sich die Kräfte F_{Z} und Fₖₜ während des Betriebes ändern, variiert auch die Steigung. Der Ersatzhebelarm zₑᵣₛ kann dann durch die Division des gemessenen Biegemoments durch die jeweilige Steigung für jeden beliebigen Zeitpunkt bestimmt werden.

Die Bestimmung des Ersatzhebelarms zₑᵣₛ aus dem an den Stellen x₂ und x₃ gemessenen bzw. berechneten Biegemoment ist im Einzelnen aus Fig. 13 ersichtlich. Hierbei werden auch die Fasenbreite b am Lager A (s. Fig. 1) und der Abstand x_{DMS} der Messstelle 1 zur Lagerkante 12 (Fig. 1) berücksichtigt.

## Patentansprüche

1. Verfahren zur Bestimmung der Lagerkräfte einer Welle, insbesondere für Einspritzpumpen von Brennkraftmaschinen, die durch ein antriebsnahes erstes Lager und ein davon beabstandetes antriebsferneres zweites Lager gelagert ist und an der außerhalb des Lagerbereichs - nach Art eines Kragträgers - Antriebskräfte angreifen, wobei das durch die Antriebskräfte auf die Welle ausgeübte (Umlauf-) Biegemoment an einer antriebsseitig auf der Welle neben dem ersten Lager angeordneten Messstelle ermittelt wird und daraus nach den Gesetzen der Mechanik die Lagerkräfte errechnet werden, **dadurch gekennzeichnet, dass** der zur Ermittlung der auf das erste Lager (Lager A) wirkenden Lagerkraft (F_{LA}) erforderliche Biegemomentenverlauf und daraus die Biegebelastung (F_{Z} und Fₖₜ) der Welle (10) durch eine erste Messstelle (Messstelle 1) und eine mit dieser zusammenwirkende zweite Messstelle (Messstelle 2) bestimmt wird und dass die zweite Messstelle auf der Welle (10) im Bereich des ersten Lagers (Lager A) vorgesehen wird (Fig. 10 und 11).

2. Verfahren nach Anspruch 1, zur Bestimmung der Lagerkraft (F_{LA}) des ersten Lagers (Lager A), wobei die Welle (10) im weiteren Abstand (z) vom ersten Lager (Lager A) von einer ersten Biegekraft (F_{Z}) und im näheren Abstand (p) vom ersten Lager (Lager A) von einer zweiten Biegekraft (Fₖₜ) belastet wird, **dadurch gekennzeichnet, dass** das benötigte Biegemoment (Mₓ₁) am Angriffspunkt (x₁) der zweiten Biegekraft (Fₖₜ) durch das an der ersten Messstelle (Messstelle 1) gemessene Biegemoment (Mₓ₃) über die Steigung im Wege der Extrapolation errechnet wird und dass anschließend die beiden Biegekräfte (F_{Z}, Fₖₜ) aus dem an der zweiten Messstelle (Messstelle 2) gemessenen Biegemoment (Mₓ₂) und dem errechneten Biegemoment (Mₓ₁) nach den Gesetzen der Mechanik errechnet werden (Fig. 4, 5 und 10, 11).

3. Verfahren nach Anspruch 2, wobei die Biegekräfte in unterschiedlichen Richtungen bzw. Ebenen (1-1 bzw. 2-2) auf die Welle (10) einwirken, **dadurch gekennzeichnet, dass** die aus den gemessenen Biegemomenten (Mₓ₂ und Mₓ₃) und dem errechneten Biegemoment (Mₓ₁) errechneten Biegekräfte (F_{z} und Fₖₜ) in einer resultierenden Ebene ermittelt werden (Fig. 10).

4. Verfahren nach Anspruch 2 oder 3, **dadurch gekennzeichnet, dass** aus den beiden Biegekräften (F_{z} und Fₖₜ) über die beiden Messstellen (1 und 2) eine einzige (resultierende) Ersatzkraft (Fₑᵣₛ) und deren Hebelarm (zₑᵣₛ) zum ersten Lager (Lager A) ermittelt werden (Fig. 12 und 13).

5. Verfahren nach einem oder mehreren der vorstehenden Ansprüche, **dadurch gekennzeichnet, dass** vor Durchführung der Messungen zunächst die Messstellen (1, 2 und 3) an einer Messwelle (10) mit einem für alle Messstellen einheitlichen Biegemoment kalibriert werden (Fig. 7 und 8).

6. Verfahren nach Anspruch 5, **dadurch gekennzeichnet, dass** die Messwelle (10) zur Kalibrierung nur am zweiten Lager (Lager B) gelagert ist.

7. Verfahren nach Anspruch 5 und 6, **dadurch gekennzeichnet, dass** - zur Kalibrierung der beiden Messstellen (Messstellen 1 und 2) im Bereich des ersten Lagers (Lager A) - am antriebsseitigen Ende der Messwelle (10) ein zusätzliches Rohr (26) koaxial befestigt wird, an dem ein über einen Hebelarm (k₅) durch eine Masse (Fₖ₅) belastetes Zusatzwerkzeug (27) angeordnet wird.

8. Verfahren nach Anspruch 5 und 6, **dadurch gekennzeichnet, dass** - zur Kalibrierung einer dritten Messstelle (Messstelle 3) im Bereich des zweiten Lagers (Lager B) an dem vom Antrieb abgewandten (rückseitigen) Ende der Messwelle (10) ein zusätzliches Rohr (26 a) koaxial befestigt wird, an dem ein über einen Hebelarm (k₅) durch eine Masse (Fₖ₅) belastetes Zusatzwerkzeug (27) angeordnet wird (Fig. 8 und 9).

## Claims

1. Method for determining the bearing forces of a shaft, in particular for injection pumps of internal combustion engines, which shaft is mounted by a first bearing which is close to the drive and by a second bearing which is spaced apart from the former and is at a greater distance from the drive, drive forces acting on the said shaft outside the bearing region, in the manner of a cantilever beam, the (rotational) bending moment which is exerted on the shaft by the drive forces being determined at a measuring point which is arranged on the drive side on the shaft next to the first bearing, and the bearing forces being calculated form this according to the laws of mechanics, **characterized in that** the bending moment profile which is required to determine the bearing force (F_{LA}) which acts on the first bearing (bearing A), and from this the flexural stress (F_{Z} and Fₖₜ) of the shaft (10), are determined by a first measuring point (measuring point 1) and a second measuring point (measuring point 2) which interacts with the former, and **in that** the second measuring point is provided on the shaft (10) in the region of the first bearing (bearing A) (Figs 10 and 11).

2. Method according to Claim 1, for determining the bearing force (F_{LA}) of the first bearing (bearing A), the shaft (10) being loaded by a first bending force (F_{Z}) at a greater spacing (z) from the first bearing (bearing A) and by a second bending force (Fₖₜ) at a smaller spacing (p) from the first bearing (bearing A), **characterized in that** the required bending moment (Mₓ₁) at the action point (x₁) of the second bending force (Fₖₜ) is calculated by the method of extrapolation by the bending moment (Mₓ₃) which is measured at the first measuring point (measuring point 1) via the gradient, and **in that** subsequently the two bending forces (F_{Z}, Fₖₜ) are calculated from the bending moment (Mₓ₂) which is measured at the second measuring point (measuring point 2) and the calculated bending moment (Mₓ₁), according to the laws of mechanics (Figs 4, 5 and 10, 11).

3. Method according to Claim 2, the bending forces acting on the shaft (10) in different directions or planes (1-1 and 2-2), **characterized in that** the bending forces (F_{Z} and Fₖₜ) which are calculated from the measured bending moments (Mₓ₂ and Mₓ₃) and the calculated bending moment (Mₓ₁) are determined in one resulting plane (Fig. 10).

4. Method according to Claim 2 or 3, **characterized in that** a single (resulting) resultant force (Fₑᵣₛ) and its lever arm (zₑᵣₛ) with respect to the first bearing (bearing A) are determined from the two bending forces (F_{Z} and Fₖₜ) via the two measuring points (1 and 2) (Figs 12 and 13).

5. Method according to one or more of the preceding claims, **characterized in that**, before the measurements are carried out, first of all the measuring points (1, 2 and 3) are calibrated on a measuring shaft (10) with a uniform bending moment for all measuring points (Figs 7 and 8).

6. Method according to Claim 5, **characterized in that** the measuring shaft (10) is mounted only on the second bearing (bearing B) for calibration.

7. Method according to Claims 5 and 6, **characterized in that**, in order to calibrate the two measuring points (measuring points 1 and 2) in the region of the first bearing (bearing A), an additional tube (26) is fastened coaxially to the drive-side end of the measuring shaft (10), on which tube (26) an additional tool (27) is arranged which is loaded by a mass (Fₖ₅) via a lever arm (k₅).

8. Method according to Claims 5 and 6, **characterized in that**, in order to calibrate a third measuring point (measuring point 3) in the region of the second bearing (bearing B), an additional tube (26a) is fastened coaxially to the (rear-side) end of the measuring shaft (10) which faces away from the drive, on which tube (26a) an additional tool (27) is arranged which is loaded by a mass (Fₖ₅) via a lever arm (k₅) (Figs 8 and 9).

## Revendications

1. Procédé pour la détermination des forces de palier d'un arbre, en particulier pour des pompes d'injection de moteurs à combustion interne, monté à travers un premier palier proche de l'entraînement et un deuxième palier écarté de celui-ci et plus éloigné de l'entraînement, et sur lequel agissent des forces motrices à l'extérieur de la zone de palier
- tel un support encastré -, selon lequel on détermine le couple de flexion (rotative) exercé sur l'arbre par les forces motrices en un point de mesure disposé sur l'arbre, côté entraînement, à côté du premier palier et on calcule les forces de palier partir de là conformément aux lois de la mécanique,
**caractérisé en ce que**
le parcours du couple de flexion nécessaire à la détermination de la force de palier (F_{LA}) agissant sur le premier palier (palier A) et, on détermine à partir de là, la charge de flexion (F_{Z} et Fₖₜ) de l'arbre (10) en un premier point de mesure (point de mesure 1) et un deuxième point de mesure (point de mesure 2) coopérant avec celui-ci et le deuxième point de mesure est prévu sur l'arbre (10) au niveau du premier palier (palier A) (voir fig. 10 et 11).

2. Procédé selon la revendication 1 pour la détermination de la force de palier (F_{LA}) du premier palier (palier A), dont l'arbre (10) est sollicité à une autre distance (z) du premier palier (palier A) par une première force de flexion (F_{Z}) et à une distance plus proche (p) du premier palier (palier A), par une deuxième force de flexion (Fₖₜ),
**caractérisé en ce que**
le couple de flexion nécessaire (Mₓ₁) sur le centre de pression (x₁) de la deuxième force de flexion (Fₖₜ) est calculé grâce au couple de flexion (Mₓ₃) mesuré sur le premier point de mesure (point de mesure 1) par la pente du chemin de l'extrapolation, puis, les deux forces de flexion (F_{Z}, Fₖₜ) sont calculées à partir du couple de flexion (Mₓ₂) mesuré sur le deuxième point de mesure (point de mesure 2) et le couple de flexion calculé (Mₓ₁) conformément aux lois de la mécanique (Fig. 4, 5 et 10, 11).

3. Procédé selon la revendication 2, dont les forces de flexion agissent dans différentes directions ou sur différents plans (1-1 respectivement 2 - 2) sur l'arbre (10),
**caractérisé en ce qu'**
on détermine les forces de flexion (F_{Z} et Fₖₜ) calculées à partir des couples de flexion mesurés (Mₓ₂ et Mₓ₃) et du couple de flexion calculé (Mₓ₁) sur un plan résultant (fig. 10).

4. Procédé selon la revendication 2 ou 3,
**caractérisé en ce qu'**
on détermine une seule force de remplacement (résultante) (Fₑᵣₛ) et son bras de levier (Zₑᵣₛ) vers le premier palier (palier A) à partir des deux forces de flexion (F_{Z} et Fₖₜ) sur les deux points de mesure (1 et 2) (fig. 12 et 13).

5. Procédé selon l'une quelconque ou plusieurs des revendications précédentes,
**caractérisé en ce qu'**
on calibre d'abord les points de mesure (1, 2 et 3) sur un arbre de mesure (10) avec un couple de flexion uniforme pour tous les points de mesure avant d'effectuer les mesures (fig. 7 et 8).

6. Procédé selon la revendication 5,
**caractérisé en ce que**
l'arbre de mesure (10) servant au calibrage n'est monté que sur le deuxième palier (palier B).

7. Procédé selon les revendications 5 et 6,
**caractérisé en ce que**
pour calibrer les deux points de mesure (points de mesure 1 et 2) au niveau du premier palier (palier A), sur l'extrémité côté entraînement de l'arbre de mesure (10), on fixe coaxialement un tube supplémentaire (26) sur lequel se trouve un outil supplémentaire (27) sollicité par une masse (Fₖ₅) par l'intermédiaire d'un bras de levier (k₅).

8. Procédé selon les revendications 5 et 6,
**caractérisé en ce que**
pour calibrer un troisième point de mesure (point de mesure 3) au niveau du deuxième palier (palier B), sur l'extrémité (arrière) opposée à l'entraînement de l'arbre de mesure (10), on fixe coaxialement un tube supplémentaire (26 a) sur lequel se trouve un outil supplémentaire (27) sollicité par une masse (Fₖ₅) par l'intermédiaire d'un bras de levier (k₅) (fig. 8 et 9).
